# EUROPEAN PATENT SPECIFICATION

(11) **EP 2 671 693 B1**
(45) Date of publication and mention of the grant of the patent: **01.04.2015**
(21) Application number: 13170350.6
(22) Date of filing: 04.06.2013
(51) Int. Cl.: B25J 19/02, B25J 9/00, B25J 15/00

(54) **An apparatus and method for transferring gloves**
Vorrichtung und Verfahren zur Übertragung von Handschuhen
Appareil et procédé pour transférer des gants

(30) Priority: 05.06.2012 MY PI1200339
(43) Date of publication of application: 11.12.2013
(73) Proprietor: Pentamaster Engineering (M) SDN BHD, 11900 Pulau Pinang (MY)
(72) Inventor: Chuah, Choon Bin, 11900 Pulau Pinang (MY)
(74) Representative: Kelly, Donal Morgan

(56) References cited:
- CN-U- 201 833 371
- CN-U- 201 856 908
- CN-U- 202 225 358
- DE-U1- 29 916 095
- GB-A- 2 474 725

## Description

### Background of the Invention

### Field of the Invention

This invention relates to a glove transferring technology, and more particularly to an apparatus and method for transferring gloves from a conveyor to a workstation.

### Description of Related Arts

Rubber gloves manufacturing and processing technology has been around since decades ago. Post manufacturing processing such as quality inspection is often needed for newly synthesised gloves and used gloves collected for reprocessing. This process involves mounting the gloves to a holding means which is moved by a conveyor means for undergoing a series of stages, for example, inflation leakage test and sterilization.

US Patent No. 3820383 disclosed an apparatus for inspecting gloves to filter out the defective gloves. The apparatus includes a mounting member on a conveyor mechanism for holding the gloves. Further processing of the gloves then includes inflation, light screen inspection, and defective glove removal. However, the document does not disclose the method of transferring of the glove from a conveyor to the mounting member.

Malaysian Patent Application No. PI 20083650 disclosed a system for processing reusable gloves. The process also involves mounting the gloves to an engaging means that hold the gloves and moves through a series of processing stations. Similarly, this cited document discloses the mounting of the gloves to the engaging means by manually stretching the glove cuffs to the engaging means. The manual transferring of gloves to the workstations would involve a considerable labour cost.

Prior arts exist that describes automated transfer of articles between workstations. US Patent No. 5219264 disclosed an apparatus for transferring an article using a robot system with a gripper assembly. The system also includes a visual inspection system for determining location of the article and directing the robotic arm to pick up the article. However, the system disclosed is not suitable for transferring a flexible article such as a rubber glove because the robotic arm would not be efficient in gripping the glove. Furthermore, gripping the glove at simply any part of the glove would not enable subsequent transferring of the glove to a holding or engaging means of a workstation.

UK patent application GB 2474725 A disclosed an apparatus for stacking gloves using a robotic arm with a pick-up assembly. However, the pick-up assembly transfers the gloves by means of static electricity and is not suitable for opening the gloves.

Accordingly, it can be seen in the prior arts that there exists a need to provide a an apparatus and method for transferring gloves from a conveyor means to a working station which is fully automated and specifically suited for gripping and holding gloves.

### Summary of Invention

It is an objective of the present invention to provide an apparatus and method for automatically transferring gloves from a conveyor to a workstation.

It is also an objective of the present invention to provide an apparatus and method for transferring gloves from a conveyor to a workstation with a high success rate.

It is yet another objective of the present invention to provide an apparatus and method for locating each piece of the gloves for subsequent processing.

Accordingly, these objectives may be achieved by following the teachings of the present invention. The present invention relates to an apparatus for transferring a glove from a conveyor to a workstation, the apparatus comprising: a camera; a pick-up assembly comprising a pair of inner grippers and two pairs of outer grippers; a sensor; a robotic arm provided with the pick-up assembly; and a processor. The present invention also relates to a method for transferring a glove from a conveyor to a workstation, the method comprising the steps of: locating a cuff of the glove on the conveyor by capturing an image on the conveyor with a camera and analyzing the image with a processor; using a robotic arm to move a pick-up assembly to the located cuff; gripping the cuff with a pair of inner grippers of the pick-up assembly and lifting the glove by retracting the pair of inner grippers; opening the glove by grabbing and sliding apart the two pairs of outer grippers; detecting the glove by using a sensor; shifting the glove towards the workstation by using the robotic arm; transferring the glove to the workstation by engaging the glove to the workstation.

### Brief Description of the Drawings

The features of the invention will be more readily understood and appreciated from the following detailed description when read in conjunction with the accompanying drawings of the preferred embodiment of the present invention, in which:
Fig. 1 is a diagram showing an apparatus for transferring gloves from a conveyor;
Fig. 2 is a diagram showing the apparatus for transferring gloves supported on a frame structure;
Fig. 3 is a diagram showing an enlarged view of a pick-up assembly of the apparatus for transferring gloves;
Fig. 4 is a diagram showing the pick-up assembly gripping a glove.

### Detailed Description of the Invention

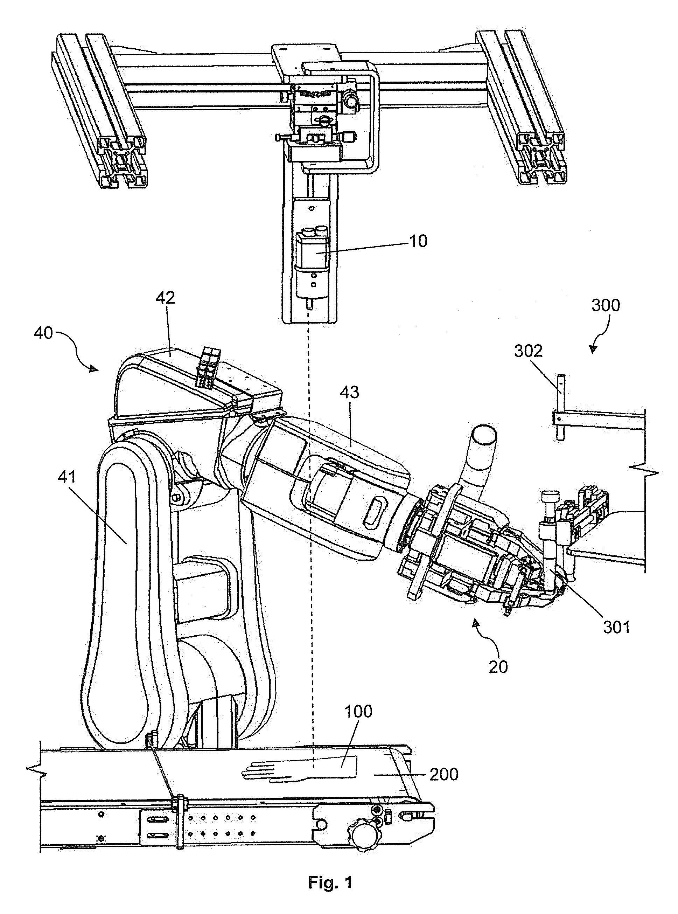

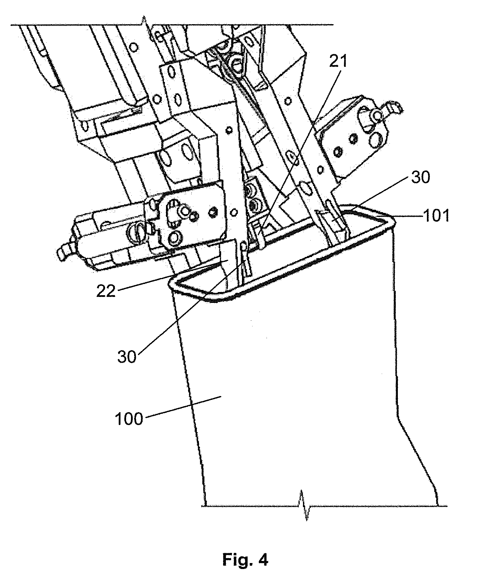

As required, detailed embodiments of the present invention are disclosed herein; however, it is to be understood that the disclosed embodiments are merely exemplary of the invention, which may be embodied in various forms. Therefore, specific structural and functional details disclosed herein are not to be interpreted as limiting but merely as a basis for claims. It should be understood that the drawings and detailed description thereto are not intended to limit the invention to the particular form disclosed, but on the contrary, the invention is to cover all modification, equivalents and alternatives falling within the scope of the present invention as defined by the appended claims. As used throughout this application, the word "may" is used in a permissive sense (i.e., meaning having the potential to), rather than the mandatory sense (i.e., meaning must). Similarly, the words "include," "including," and "includes" mean including, but not limited to. Further, the words "a" or "an" mean "at least one" and the word "plurality" means one or more, unless otherwise mentioned. Where the abbreviations of technical terms are used, these indicate the commonly accepted meanings as known in the technical field. For ease of reference, common reference numerals will be used throughout the figures when referring to the same or similar features common to the figures. The present invention will now be described with reference to Figs. 1-4.

The present invention relates to an apparatus for transferring a glove (100) from a conveyor (200) to a workstation (300), the apparatus comprising:
a camera (10) for locating a cuff (101) of the glove (100) on the conveyor (200);
a pick-up assembly (20) comprising a pair of inner grippers (21) for gripping the cuff (101) and two pairs of outer grippers (22) for opening the glove (100);
a pair of sensors (30) for determining the position of the glove (100) gripped by the pair of inner grippers (21) and the two pairs of outer grippers (22);
a robotic arm (40) comprising a plurality of joined segments (41, 42, 43), wherein the pick-up assembly (20) is mounted on one of the plurality of segments (43), for moving the pick-up assembly (20) in different directions;
a processor electrically connected to the camera (10), the pick-up assembly (20), the sensor (30), and the robotic arm (40), for receiving signals from the camera (10) and the pair of sensors (30) and sending commands to the pick-up assembly (20) and the robotic arm (40).

In a preferred embodiment of the apparatus for transferring a glove (100) from a conveyor (200) to a workstation (300), the camera (10) is a colour charged coupled device camera.

In a preferred embodiment of the apparatus for transferring a glove (100) from a conveyor (200) to a workstation (300), the camera (10) is a near infrared camera.

In a preferred embodiment of the apparatus for transferring a glove (100) from a conveyor (200) to a workstation (300), the pair of inner grippers (21) and the two pairs of outer grippers (22) are pneumatically actuated.

In a preferred embodiment of the apparatus for transferring a glove (100) from a conveyor (200) to a workstation (300), the two pairs of outer grippers (22) have rollers (23).

In a preferred embodiment of the apparatus for transferring a glove (100) from a conveyor (200) to a workstation (300), the robotic arm (40) comprises a lower segment (41) for horizontal rotation, a middle segment (42) for vertical rotation, and an upper segment (43) for axial rotation.

In a preferred embodiment of the apparatus for transferring a glove (100) from a conveyor (200) to a workstation (300), the pair of sensors (30) is a pair of optical sensors.

In a preferred embodiment of the apparatus for transferring a glove (100) from a conveyor (200) to a workstation (300), each sensor of the pair of sensors (30) is provided on an outward side of each pair of the two pairs of outer grippers (22).

In a preferred embodiment of the apparatus for transferring a glove (100) from a conveyor (200) to a workstation (300), detection of alove (100) bv either or both of the pair of sensors (30) indicates the glove (100) is positioned outward of the robotic arm and absence of detection by both of the pair of the sensors indicates the glove (100) is positioned toward the robotic arm.

The present invention also provides a method for transferring a glove (100) from a conveyor (200) to a workstation (300), the method comprising the steps of:
locating a cuff (101) of the glove (100) on the conveyor (200) by capturing an image on the conveyor (200) with a camera (10) and analyzing the image with a processor;
using a robotic arm (40) to move a pick-up assembly (20) to the located cuff (101);
gripping the cuff (101) with a pair of inner grippers (21) of the pick-up assembly (20) and lifting the glove (100) by retracting the pair of inner grippers (21);
opening the glove (100) by grabbing the glove (100) with the two pairs of outer grippers (22) of the pick-up assembly (20) and sliding apart the two pairs of outer grippers (22);
detecting the glove (100) position being held by the pair of inner grippers (21) by using a pair of sensors (30);
rotating the pick-up assembly if the glove (100) is not positioned outward of the robotic arm (40);
shifting the glove (100) towards the workstation (300) by using the robotic arm (40);
transferring the glove (100) to the workstation (300) by engaging the glove (100) to the workstation (300).

In a preferred embodiment of the method for transferring a glove (100) from a conveyor (200) to a workstation (300), the cuff (101) is in a colour distinctive from the glove (100) colour and the conveyor (200) colour.

In a preferred embodiment of the method for transferring a glove (100) from a conveyor (200) to a workstation (300), the analysis of the image is conducted by differentiating the colour of the cuff (101) from another part of the image and assigning a coordinate to the cuff (101).

In a preferred embodiment of the method for transferring a glove (100) from a conveyor (200) to a workstation (300), the image is captured by a near infrared camera to show the difference in thickness of the glove (100) and the cuff (101).

In a preferred embodiment of the method for transferring a glove (100) from a conveyor (200) to a workstation (300), analysis of image is conducted by differentiating the thickness of the cuff (101) and assigning a coordinate to the cuff (101).

In a preferred embodiment of the method for transferring a glove (100) from a conveyor (200) to a workstation (300), the opening the glove (100) is facilitated by blowing air into the glove (100) by using an air purge (302) before engaging with the workstation (300).

In a preferred embodiment of the method for transferring a glove (100) from a conveyor (200) to a workstation (300), the step of engaging the glove (100) to the workstation (300) comprises lifting the glove (100) to a pair of retaining shafts (301) of the workstation (300); moving apart said pair of retaining shafts (301) to stretch and hold the glove (100); releasing the glove (100) from the pair of inner grippers (21) and the two pairs of outer grippers (22).

The present invention relates to the apparatus for transferring gloves (100) from the conveyor (200). For example, the conveyor (200) is connected to a glove (100) loading facility for bringing the gloves (100) to the apparatus.

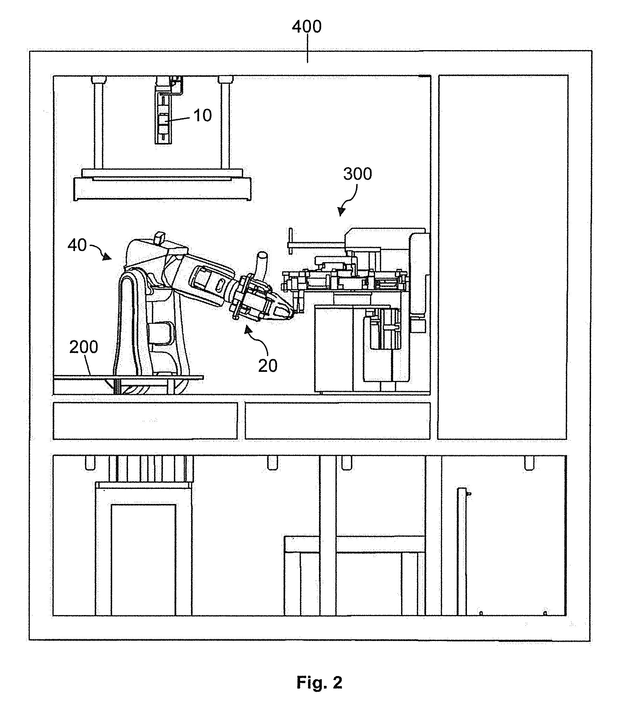

With reference to Fig. 1, the apparatus comprises the camera (10) for locating the cuff (101) of the glove (100) on a designated area on the conveyor (200). The camera (10) is generally located above the conveyor (200) and the robotic arm (40). As can be seen in Fig. 2, the position of the camera (10) may be permanently fixed on a frame structure (400) which provides support to the pick-up assembly (20), the robotic arm (40), the workstation (300), and the conveyor (200) as well. In a preferred embodiment, the camera (10) is a colour charged coupled device (CCD) camera which is able to capture colour images for distinguishing the cuff (101) of the glove (100) which is made in a different colour from the glove (100). In another preferred embodiment, the camera (10) is a near infrared camera which is able to capture image based on near infrared light penetration. The near infrared camera is used together with the near infrared lighting, near infrared sensitive lens, and visible light filter.

The pick-up assembly (20) is mounted on the robotic arm (40) for gripping the glove (100) from the conveyor (200) and holding the glove (100). Fig. 2 shows an enlarged view of the pick-up assembly (20). The pick-up assembly (20) comprises the pair of inner grippers (21) and the two pairs of outer grippers (22). The pair of inner grippers (21) each has a notch (24) specifically suited for gripping and holding the cuff (101) of the glove (100). Each of the two pairs of outer grippers (22) are located adjacent to one side of the pair of inner grippers (21), such that the two pairs of the outer grippers (22) are relatively outward from the pair of inner grippers (21) located centrally. The two pairs of the outer grippers (22) have longer fingers compared to the pair of inner grippers (21) for grabbing the glove (100) body instead of the cuff (101). As an example, the pair of inner grippers (21) and the two pairs of outer grippers (22) are all double acting angular type. In a preferred embodiment, the pair of inner grippers (21) and the two pairs of outer grippers (22) are pneumatically actuated. In a preferred embodiment of the apparatus for transferring a glove (100) from a conveyor (200), the two pairs of outer grippers (22) have rollers (23) for sliding along the glove (100) fabric.

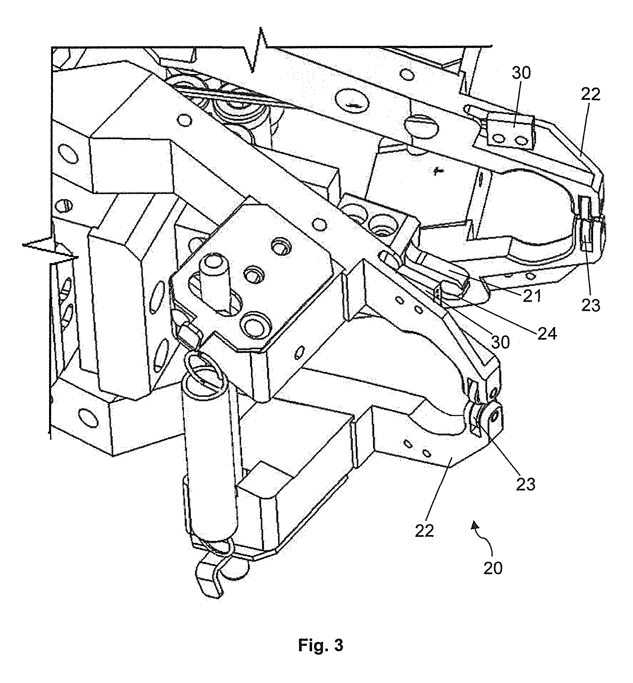

The pair of sensors (30) is used to determine the position of the glove (100) being held by the pair of inner grippers (21). In a preferred embodiment, the pair of sensors (30) is a pair of optical sensors which emits light beam in the direction of the glove (100). In a more preferred embodiment, a fiber optical sensor is used. In a preferred embodiment, each sensor (30) of the pair of sensors (30) is provided on the outward side of each of the two pairs of outer grippers (22). In a preferred embodiment, detection of glove (100) by either or both of the pair of sensors (30) indicates the glove (100) is positioned outward of the robotic arm (Fig. 3) and absence of detection by both of the pair of the sensors (30) indicates the glove (100) is positioned toward the robotic arm.

The robotic arm (40) is used to move the pick-up assembly (20) in different directions. This is achieved by having a plurality of joined segments (41, 42, 43). In a preferred embodiment, the robotic arm (40) comprises the lower segment (41) supported on a surface, which can be tilted or rotated horizontally. The middle segment (42) is connected at a first end to the lower segment (41), and is rotatable vertically relative to the lower segment (41). The upper segment (43) is connected to a second end of the middle segment (42) and is able to rotate axially. The pick-up assembly (20) is mounted on the upper segment (43) of the robotic arm (40).

The processor is electrically connected to the camera (10), the pick-up assembly (20), the sensor (30) and the robotic arm (40) for coordination and control of the apparatus operation. The processor receives signals from the camera (10) and the sensor (30) and sends commands to the pick-up assembly (20) and the robotic arm (40).

The present invention also relates to a method for transferring a glove (100) from a conveyor (200). The glove (100) is provided on a designated area on the conveyor (200) where the camera (10) from above captures images on the designated area of the conveyor (200). The images captured are sent to the processor for analysis to pinpoint the location of the cuff (101). The method of the present invention is specifically suited for the gloves (100).

In a preferred embodiment, the cuff (101) is in a colour distinctive from the glove (100) colour and the conveyor (200) colour, so that the cuff (101) can be distinguished in the images. For example, the cuff (101) in green colour is used when the conveyor (200) is black in colour and the glove (100) body is white in colour. The image captured is analyzed by the processor and the colour of the cuff (101) is differentiated from the remaining part of the image. A coordinate is assigned to the cuff (101) for the pick-up assembly to pick up cuff (101).

In another preferred embodiment, the cuff (101) is detected by the near infrared camera wherein the near infrared light penetration level is different on the glove (100) and the cuff (101) due to the difference in thickness. The cuff (101) is thicker than the other portion of the glove (100), and thus forms a basis for this detection method. The image obtained showing the contrast is then analyzed to locate the cuff (101) by assigning a coordinate to the cuff (101).

With the location of the glove (100) determined, the pick-up assembly (20) is moved accordingly to the glove (100) on the conveyor (200) by the robotic arm (40). Rotation or tilting of each of the plurality of the segments (41, 42, 43) is able to produce a three-dimensional movement according to the command from the processor.

When the pick-up assembly (20) is moved to directly above the cuff (101), the pair of inner grippers (21) then grips the cuff (101) and retracts to lift the glove (100) from the conveyor (200).

After the glove (100) is picked up by the pair of inner grippers (21), the two pairs of outer grippers (22) grabs one layer of the glove (100) fabric so that the glove (100) can be opened later on. The two pairs of the outer grippers (22) then slide apart with the rollers (23) along the glove (100) fabric to open the glove (100).

The pair of sensors (30) determines whether the glove (100) is positioned outward of the robotic arm (40) to enable engaging with the workstation (300) later. If the glove (100) is positioned toward the robotic arm (40), pick-up assembly will rotate 180° so that the glove (100) will be positioned outward of the robotic arm (40) as shown in Fig. 3.

The glove (100) is then shifted by using the robotic arm towards the workstation (300), for example, for glove (100) leakage inspection. In a preferred embodiment, air is blown into the glove (100) by using an air purge (302) from above for inflating the glove (100) before engaging with the workstation (300). This enables a higher success rate of the gloves (100) to be transferred to the workstation (300). The glove (100) is then transferred to the workstation (300) by engaging with the workstation (300). In a preferred embodiment, the glove (100) is lifted to a pair of retaining shafts (301) of the workstation (300), such that the pair of retaining shafts (301) goes into the glove (100) opening. The pair of the retaining shafts (301) is then moved apart to stretch and hold the glove (100). The pair of inner grippers (21) and the two pairs of outer grippers (22) then release the glove (100). The operation is then started with another cycle to transfer another glove (100) on the conveyor (200).

Although the present invention has been described with reference to specific embodiments, also shown in the appended figures, it will be apparent for those skilled in the art that many variations and modifications can be done within the scope of the invention as described in the specification and defined in the following claims.

Description of the reference numerals used in the accompanying drawings according to the present invention:

| **Reference Numerals** | **Description** |
|---|---|
| 10 | Camera |
| 20 | Pick-up assembly |
| 21 | Inner grippers |
| 22 | Outer grippers |
| 23 | Roller |
| 24 | Notch |
| 30 | Sensor |
| 40 | Robotic arm |
| 41 | Lower segment |
| 42 | Middle segment |
| 43 | Upper segment |
| 100 | Glove |
| 101 | Cuff |
| 200 | Conveyor |
| 300 | Workstation |
| 301 | Retaining shaft |
| 302 | Air purge |
| 400 | Frame structure |

## Claims

1. An apparatus for transferring a glove (100) from a conveyor (200) to a workstation (300), the apparatus comprising:
a camera (10) for locating a cuff (101) of the glove (100) on the conveyor (200);
a pick-up assembly (20) comprising a pair of inner grippers (21) for gripping the cuff (101) and two pairs of outer grippers (22) for opening the glove (100);
a pair of sensors (30) for determining the position of the glove (100) gripped by the pair of inner grippers (21) and the two pairs of outer grippers (22);
a robotic arm (40) comprising a plurality of joined segments (41, 42, 43), wherein the pick-up assembly (20) is mounted on one of the plurality of segments (43), for moving the pick-up assembly (20) in different directions;
a processor electrically connected to the camera (10), the pick-up assembly (20), the sensor (30), and the robotic arm (40), for receiving signals from the camera (10) and the pair of sensors (30) and sending commands to the pick-up assembly (20) and the robotic arm (40).

2. An apparatus for transferring a glove (100) from a conveyor (200) to a workstation (300) according to claim 1, wherein the camera (10) is a colour charged coupled device camera.

3. An apparatus for transferring a glove (100) from a conveyor (200) to a workstation (300) according to claim 1, wherein the camera (10) is a near infrared camera.

4. An apparatus for transferring a glove (100) from a conveyor (200) to a workstation (300) according to claim 1, wherein the pair of inner grippers (21) and the two pairs of outer grippers (22) are pneumatically actuated.

5. An apparatus for transferring a glove (100) from a conveyor (200) to a workstation (300) according to claim 1, wherein the two pairs of outer grippers (22) have rollers (23).

6. An apparatus for transferring a glove (100) from a conveyor (200) to a workstation (300) according to claim 1, wherein the robotic arm (40) comprises a lower segment (41) for horizontal rotation, a middle segment (42) for vertical rotation, and an upper segment (43) for axial rotation.

7. An apparatus for transferring a glove (100) from a conveyor (200) to a workstation (300) according to claim 1, wherein the pair of sensors (30) is a pair of optical sensors.

8. An apparatus for transferring a glove (100) from a conveyor (200) to a workstation (300) according to claim 1, wherein each sensor of the pair of sensors (30) is provided on an outward side of each pair of the two pairs of outer grippers (22).

9. An apparatus for transferring a glove (100) from a conveyor (200) to a workstation (300) according to claim 1, wherein detection of glove (100) by either or both of the pair of sensors (30) indicates the glove (100) is positioned outward of the robotic arm and absence of detection by both of the pair of the sensors indicates the glove (100) is positioned toward the robotic arm.

10. A method for transferring a glove (100) from a conveyor (200) to a workstation (300), the method comprising the steps of:
locating a cuff (101) of the glove (100) on the conveyor (200) by capturing an image on the conveyor (200) with a camera (10) and analyzing the image with a processor;
using a robotic arm (40) to move a pick-up assembly (20) to the located cuff (101);
gripping the cuff (101) with a pair of inner grippers (21) of the pick-up assembly (20) and lifting the glove (100) by retracting the pair of inner grippers (21);
opening the glove (100) by grabbing the glove (100) with the two pairs of outer grippers (22) of the pick-up assembly (20) and sliding apart the two pairs of outer grippers (22);
detecting the glove (100) position being held by the pair of inner grippers (21) by using a pair of sensors (30);
rotating the pick-up assembly if the glove (100) is not positioned outward of the robotic arm (40);
shifting the glove (100) towards the workstation (300) by using the robotic arm (40);
transferring the glove (100) to the workstation (300) by engaging the glove (100) to the workstation (300).

11. A method for transferring a glove (100) from a conveyor (200) to a workstation (300) according to claim 10, wherein the cuff (101) is in a colour distinctive from the glove (100) colour and the conveyor (200) colour.

12. A method for transferring a glove (100) from a conveyor (200) to a workstation (300) according to claim 11, wherein analysis of the image is conducted by differentiating the colour of the cuff (101) from another part of the image and assigning a coordinate to the cuff (101).

13. A method for transferring a glove (100) from a conveyor (200) to a workstation (300) according to claim 10, wherein the image is captured by a near infrared camera to show the difference in thickness of the glove (100) and the cuff (101).

14. A method for transferring a glove (100) from a conveyor (200) to a workstation (300) according to claim 13, wherein analysis of image is conducted by differentiating the thickness of the cuff (101) and assigning a coordinate to the cuff (101).

15. A method for transferring a glove (100) from a conveyor (200) to a workstation (300) according to claim 10, wherein opening the glove (100) is facilitated by blowing air into the glove (100) by using an air purge (302) before engaging with the workstation (300).

16. A method for transferring a glove (100) from a conveyor (200) to a workstation (300) according to claim 10, wherein the step of engaging the glove (100) to the workstation (300) comprises lifting the glove (100) to a pair of retaining shafts (301) of the workstation (300); moving apart said pair of retaining shafts (301) to stretch and hold the glove (100); releasing the glove (100) from the pair of inner grippers (21) and the two pairs of outer grippers (22).

## Patentansprüche

1. Vorrichtung zum Überführen eines Handschuhs (100) von einem Förderer (200) an eine Arbeitsstation (300), wobei die Vorrichtung Folgendes umfasst:
eine Kamera (10) zum Orten eines Bunds (101) des Handschuhs (100) auf dem Förderer (200);
eine Aufnahmeanordnung (20), umfassend ein Paar innere Greifer (21) zum Greifen des Bunds (101) und zwei Paare äußere Greifer (22) zum Öffnen des Handschuhs (100);
ein Paar Sensoren (30) zum Bestimmen der Lage des von dem Paar innere Greifer (21) und den zwei Paaren äußere Greifer (22) ergriffenen Handschuhs (100);
einen Roboterarm (40), umfassend mehrere verbundene Segmente (41, 42, 43), wobei die Aufnahmeanordnung (20) an einem der mehreren Segmente (43) angebracht ist, um die Aufnahmeanordnung (20) in verschiedenen Richtungen zu bewegen;
einen Prozessor, der elektrisch mit der Kamera (10), der Aufnahmeanordnung (20), dem Sensor (30) und dem Roboterarm (40) verbunden ist, um Signale von der Kamera (10) und dem Paar Sensoren (30) zu empfangen und Befehle an die Aufnahmeanordnung (20) und den Roboterarm (40) zu schicken.

2. Vorrichtung zum Überführen eines Handschuhs (100) von einem Förderer (200) an eine Arbeitsstation (300) nach Anspruch 1, wobei es sich bei der Kamera (10) um eine Charged-Coupled-Device-Farbkamera handelt.

3. Vorrichtung zum Überführen eines Handschuhs (100) von einem Förderer (200) an eine Arbeitsstation (300) nach Anspruch 1, wobei es sich bei der Kamera (10) um eine Nahinfrarot-Kamera handelt.

4. Vorrichtung zum Überführen eines Handschuhs (100) von einem Förderer (200) an eine Arbeitsstation (300) nach Anspruch 1, wobei das Paar innere Greifer (21) und die zwei Paare äußere Greifer (22) druckluftbetätigt sind.

5. Vorrichtung zum Überführen eines Handschuhs (100) von einem Förderer (200) an eine Arbeitsstation (300) nach Anspruch 1, wobei die zwei Paare äußere Greifer (22) Rollen (23) aufweisen.

6. Vorrichtung zum Überführen eines Handschuhs (100) von einem Förderer (200) an eine Arbeitsstation (300) nach Anspruch 1, wobei der Roboterarm (40) ein unteres Segment (41) zur horizontalen Drehung, ein mittleres Segment (42) zur vertikalen Drehung und ein oberes Segment (43) zur axialen Drehung umfasst.

7. Vorrichtung zum Überführen eines Handschuhs (100) von einem Förderer (200) an eine Arbeitsstation (300) nach Anspruch 1, wobei es sich bei dem Paar Sensoren (30) um ein Paar optische Sensoren handelt.

8. Vorrichtung zum Überführen eines Handschuhs (100) von einem Förderer (200) an eine Arbeitsstation (300) nach Anspruch 1, wobei jeder Sensor des Paars Sensoren (30) an einer nach außen weisenden Seite jedes Paars der zwei Paare äußere Greifer (22) bereitgestellt ist.

9. Vorrichtung zum Überführen eines Handschuhs (100) von einem Förderer (200) an eine Arbeitsstation (300) nach Anspruch 1, wobei das Erkennen des Handschuhs (100) von einem oder beiden des Paars Sensoren (30) angibt, dass der Handschuh (100) von dem Roboterarm nach außen positioniert ist und die Abwesenheit des Erkenens von beiden des Paars Sensoren angibt, dass der Handschuh (100) zum Roboterarm hin positioniert ist.

10. Verfahren zum Überführen eines Handschuhs (100) von einem Förderer (200) an eine Arbeitsstation (300), wobei das Verfahren folgende Schritte umfasst:
Orten eines Bunds (101) des Handschuhs (100) auf dem Förderer (200) durch Erfassen eines Bilds auf dem Förderer (200) mit einer Kamera (10) und Analysieren des Bilds mit einem Prozessor;
Verwenden eines Roboterarms (40) zum Bewegen einer Aufnahmeanordnung (20) zu dem georteten Bund (101);
Greifen des Bunds (101) mit einem Paar innere Greifer (21) der Aufnahmeanordnung (20) und Heben des Handschuhs (100) durch Zurückziehen des Paars innere Greifer (21);
Öffnen des Handschuhs (100) durch Greifen des Handschuhs (100) mit den zwei Paaren äußere Greifer (22) der Aufnahmeanordnung (20) und Auseinanderschieben der zwei Paare äußere Greifer (22);
Erkennen der Lage des von dem Paar innere Greifer (21) gehaltenen Handschuhs (100) durch Verwenden eines Paars Sensoren (30);
Drehen der Aufnahmeanordnung, wenn der Handschuh (100) nicht von dem Roboterarm (40) nach außen positioniert ist;
Verschieben des Handschuhs (100) zu der Arbeitsstation (300) hin durch Verwenden des Roboterarms (40);
Überführen des Handschuhs (100) an die Arbeitsstation (300) durch Ineingriffbringen des Handschuhs (100) mit der Arbeitsstation (300).

11. Verfahren zum Überführen eines Handschuhs (100) von einem Förderer (200) an eine Arbeitsstation (300) nach Anspruch 10, wobei der Bund (101) in einer von der Farbe des Handschuhs (100) und der Farbe des Förderers (200) verschiedenen Farbe ist.

12. Verfahren zum Überführen eines Handschuhs (100) von einem Förderer (200) an eine Arbeitsstation (300) nach Anspruch 11, wobei die Analyse des Bilds durch Unterscheiden der Farbe des Bunds (101) von einem anderen Teil des Bilds und Zuordnen einer Koordinate zu dem Bund (101) ausgeführt wird.

13. Verfahren zum Überführen eines Handschuhs (100) von einem Förderer (200) an eine Arbeitsstation (300) nach Anspruch 10, wobei das Bild von einer Nahinfrarotkamera erfasst wird, um den Unterschied in der Dicke des Handschuhs (100) und des Bunds (101) zu zeigen.

14. Verfahren zum Überführen eines Handschuhs (100) von einem Förderer (200) an eine Arbeitsstation (300) nach Anspruch 13, wobei die Analyse des Bilds durch Unterscheiden der Dicke des Bunds (101) und Zuordnen einer Koordinate zu dem Bund (101) ausgeführt wird.

15. Verfahren zum Überführen eines Handschuhs (100) von einem Förderer (200) an eine Arbeitsstation (300) nach Anspruch 10, wobei das Öffnen des Handschuhs (100) erleichtert wird, indem durch Verwenden einer Luftspülung (302) Luft in den Handschuh (100) geblasen wird, bevor er mit der Arbeitsstation (300) in Eingriff tritt.

16. Verfahren zum Überführen eines Handschuhs (100) von einem Förderer (200) an eine Arbeitsstation (300) nach Anspruch 10, wobei der Schritt des Ineingriffbringens des Handschuhs (100) mit der Arbeitsstation (300) Folgendes umfasst: Heben des Handschuhs (100) zu einem Paar Halteschäfte (301) der Arbeitsstation (300); Auseinanderbewegen des Paars Halteschäfte (301), um den Handschuh (100) zu dehnen und zu halten; Freigeben des Handschuhs (100) von dem Paar innere Greifer (21) und den zwei Paaren äußere Greifer (22).

## Revendications

1. Appareil de transfert d'un gant (100) d'une bande transporteuse (200) à une station de travail (300), l'appareil comprenant :
une caméra (10) pour localiser une manchette (101) du gant (100) sur la bande transporteuse (200) ;
un ensemble de saisie (20) comprenant une paire de pinces internes (21) pour saisir la manchette (101) et deux paires de pinces externes (22) pour ouvrir le gant (100) ;
une paire de capteurs (30) pour déterminer la position du gant (100) saisi par la paire de pinces internes (21) et les deux paires de pinces externes (22) ;
un bras robotique (40) comprenant une pluralité de segments joints (41, 42, 43), l'ensemble de saisie (20) étant monté sur l'un de la pluralité de segments (43) pour déplacer l'ensemble de saisie (20) dans différentes directions ;
un processeur connecté électriquement à la caméra (10), à l'ensemble de saisie (20), au capteur (30) et au bras robotique (40), pour recevoir des signaux depuis la caméra (10) et la paire de capteurs (30) et envoyer des commandes à l'ensemble de saisie (20) et au bras robotique (40).

2. Appareil de transfert d'un gant (100) d'une bande transporteuse (200) à une station de travail (300) selon la revendication 1, dans lequel la caméra (10) est une caméra couleur à dispositif à transfert de charge.

3. Appareil de transfert d'un gant (100) d'une bande transporteuse (200) à une station de travail (300) selon la revendication 1, dans lequel la caméra (10) est une caméra dans l'infrarouge proche.

4. Appareil de transfert d'un gant (100) d'une bande transporteuse (200) à une station de travail (300) selon la revendication 1, dans lequel la paire de pinces internes (21) et les deux paires de pinces externes (22) sont actionnées pneumatiquement.

5. Appareil de transfert d'un gant (100) d'une bande transporteuse (200) à une station de travail (300) selon la revendication 1, dans lequel les deux paires de pinces externes (22) sont dotées de rouleaux (23).

6. Appareil de transfert d'un gant (100) d'une bande transporteuse (200) à une station de travail (300) selon la revendication 1, dans lequel le bras robotique (40) comprend un segment inférieur (41) de rotation horizontale, un segment central (42) de rotation verticale, et un segment supérieur (43) de rotation axiale.

7. Appareil de transfert d'un gant (100) d'une bande transporteuse (200) à une station de travail (300) selon la revendication 1, dans lequel la paire de capteurs (30) est une paire de capteurs optiques.

8. Appareil de transfert d'un gant (100) d'une bande transporteuse (200) à une station de travail (300) selon la revendication 1, dans lequel chaque capteur de la paire de capteurs (30) est placé sur un côté externe de chaque paire des deux paires de pinces externes (22).

9. Appareil de transfert d'un gant (100) d'une bande transporteuse (200) à une station de travail (300) selon la revendication 1, dans lequel la détection du gant (100) pour l'un ou l'autre capteur de la paire de capteurs (30), ou les deux, indique que le gant (100) est positionné vers l'extérieur du bras robotique et l'absence de détection par les deux capteurs de la paire de capteurs indique que le gant (100) est positionné vers le bras robotique.

10. Procédé de transfert d'un gant (100) d'une bande transporteuse (200) à une station de travail (300), le procédé comprenant les étapes consistant à :
localiser une manchette (101) du gant (100) sur la bande transporteuse (200) en capturant une image sur la bande transporteuse (200) avec une caméra (10) et analysant l'image avec un processeur ;
utiliser un bras robotique (40) pour déplacer un ensemble de saisie (20) jusqu'à la manchette (101) localisée ;
saisir la manchette (101) avec une paire de pinces internes (21) de l'ensemble de saisie (20) et soulever le gant (100) en rétractant la paire de pinces internes (21) ;
ouvrir le gant (100) en saisissant le gant (100) avec les deux paires de pinces externes (22) de l'ensemble de saisie (20) et écartant de manière coulissante les deux paires de pinces externes (22) ;
détecter la position du gant (100) maintenu par la paire de pinces externes (21) au moyen d'une paire de capteurs (30) ;
faire tourner l'ensemble de saisie si le gant (100) n'est pas positionné vers l'extérieur du bras robotique (40) ;
déplacer le gant (100) vers la station de travail (300) au moyen du bras robotique (40) ;
transférer le gant (100) à la station de travail (300) en engageant le gant (100) dans la station de travail (300).

11. Procédé de transfert d'un gant (100) d'une bande transporteuse (200) à une station de travail (300) selon la revendication 10, dans lequel la manchette (101) est d'une couleur distincte de la couleur du gant (100) et de la couleur de la bande transporteuse (200).

12. Procédé de transfert d'un gant (100) d'une bande transporteuse (200) à une station de travail (300) selon la revendication 11, dans lequel l'analyse de l'image est effectuée en différenciant la couleur de la manchette (101) d'une autre partie de l'image et attribuant une coordonnée à la manchette (101).

13. Procédé de transfert d'un gant (100) d'une bande transporteuse (200) à une station de travail (300) selon la revendication 10, dans lequel l'image est capturée par une caméra dans l'infrarouge proche pour montrer la différence d'épaisseur du gant (100) et de la manchette (101).

14. Procédé de transfert d'un gant (100) d'une bande transporteuse (200) à une station de travail (300) selon la revendication 13, dans lequel l'analyse de l'image est effectuée en différenciant l'épaisseur de la manchette (101) et attribuant une coordonnée à la manchette (101).

15. Procédé de transfert d'un gant (100) d'une bande transporteuse (200) à une station de travail (300) selon la revendication 10, dans lequel l'ouverture du gant (100) est facilitée en soufflant de l'air dans le gant (100) au moyen d'une purge d'air (302) avant son engagement dans la station de travail (300).

16. Procédé de transfert d'un gant (100) d'une bande transporteuse (200) à une station de travail (300) selon la revendication 10, dans lequel l'étape d'engagement du gant (100) dans la station de travail (300) comprend le soulèvement du gant (100) jusqu'à une paire d'arbres de retenue (301) de la station de travail (300) ; l'écartement de ladite paire d'arbres de retenue (301) pour étirer et retenir le gant (100) ; la libération du gant (100) d'avec la paire de pinces internes (21) et les deux paires de pinces externes (22).
